# EUROPÄISCHE PATENTSCHRIFT

(11) **EP 2 227 944 B1**
(45) Veröffentlichungstag und Bekanntmachung des Hinweises auf die Patenterteilung: **09.01.2013**
(21) Anmeldenummer: 10002626.9
(22) Anmeldetag: 12.03.2010
(51) Int. Cl.: A01J 13/00

(54) **Vorrichtung zur Erzeugung von Schlagsahne**
Method for creating whipped cream
Dispositif de production de crème Chantilly

(30) Priorität: 13.03.2009 DE 102009012682
(43) Veröffentlichungstag der Anmeldung: 15.09.2010
(73) Patentinhaber: Dr. Dieter Vaihinger GmbH & Co. Kg, 65520 Bad Camberg (DE)
(72) Erfinder: Rehbein, Bernd, 65520 Bad Camberg (DE)
(74) Vertreter: Tergau & Walkenhorst

(56) Entgegenhaltungen:
- EP-A1- 0 711 523
- EP-A1- 1 450 230
- WO-A1-92/08401
- DE-U1- 20 213 172
- LU-A1- 43 888
- US-A- 4 144 293
- US-A1- 2008 295 529

## Beschreibung

Die Erfindung betrifft eine Vorrichtung zur Erzeugung von Schlagsahne oder ähnlichen Produkten mit einem Kühlbehälter, einem im Kühlbehälter angeordneten Sahnetopf für Flüssigsahne und einem Kühlkreislauf zur Kühlung des Kühlbehälters, der einen Kühlmittelkompressor und einen am oder im Kühlbehälter angeordneten Kühlmittelverdampfer umfasst.

Frisch zubereitete Schlagsahne findet vor allem im lebensmittelverarbeitenden Bereich vielfach Verwendung. Sie wird gewöhnlich aus gekühlter Flüssigsahne erzeugt. Dazu wird sie beispielsweise durch eine Schlagvorrichtung gepumpt und mit Luft vermischt. Die daraus hervorgehende Schlagsahne hat aufgrund des Luftanteils im Vergleich zur Flüssigsahne ein in etwa zwei- bis dreifach so großes Volumen.

Im lebensmittelverarbeitenden Bereich werden gewöhnlich Geräte eingesetzt, die durch den oben geschilderten Prozess aus Flüssigsahne frische Schlagsahne erzeugen und eine komfortable, bedarfsgerechte Entnahme der Schlagsahne erlauben. Die Flüssigsahne wird dabei in einem Sahnetopf mit Hilfe eines Kühlkreislaufes gekühlt und möglichst auf einer vorgegebenen Temperatur gehalten. Ein derartiges Gerät ist beispielsweise aus der EP 0 583 506 A1 oder der EP 1 435 816 B1 bekannt.

Ein Schlagsahneautomat mit den Merkmalen des Oberbegriffs von Anspruch 1 ist aus der Gebrauchsmusterschrift DE 202 13 172 U1 bekannt. Eine Kühlvorrichtung mit einem Kompressor und einem Verdampfer sowie mit thermostatischer Temperaturregelung ist aus der US 2008/0295529 A1 bekannt.

Der Kühlkreislauf bekannter Geräte zur Erzeugung von Schlagsahne wird gewöhnlich mit fest vorgegebenen, beispielsweise werkseitig hinterlegten, Lauf- und Ruhezeiten eines Kühlmittelkompressors betrieben, wobei die Lauf- und Ruhezeiten von der Solltemperatur der Flüssigsahne abhängen können.

Ein derart betriebener Kühlkreislauf kann nicht oder allenfalls eingeschränkt auf die äußeren Betriebsbedingungen, wie beispielsweise die Umgebungstemperatur des Gerätes, reagieren. Zudem bleiben anomale Situationen, beispielsweise das Einfüllen von sehr warmer Flüssigsahne in den Sahnetopf, Ober längere Zeit unerkannt oder unbehandelt, wodurch sich mitunter gesundheitliche Beeinträchtigungen des Sahnekonsumenten ergeben können. Des Weiteren besteht die Gefahr, dass das Gerät selbst Schaden nimmt bzw. eine erhöhte Störanfälligkeit besitzt. Der mit der Reparatur befasste Servicetechniker muss häufig den Fehler erst umständlich suchen.

Der Erfindung liegt daher die Aufgabe zugrunde, eine Vorrichtung zur Erzeugung von Schlagsahne oder ähnlichen Produkten anzugeben, deren Kühlkreislauf eine hohe Flexibilität und Responsivität auf unterschiedliche Betriebsbedingungen und -zustände aufweist, und bei der Betriebsstörungen zuverlässig erkannt und behandelt werden.

Diese Aufgabe wird erfindungsgemäß gelöst durch die Merkmale von Anspruch 1.

Vorteilhafte Ausgestaltungen der Erfindung sind Gegenstand der Unteransprüche.

Die Erfindung geht von der Überlegung aus, dass Vorrichtungen bzw. Geräte zur Erzeugung von Schlagsahne ganz unterschiedlichen Betriebsbedingungen ausgesetzt sein können. Dazu gehören beispielsweise die Umgebungstemperatur des Gerätes sowie die Beanspruchung der einzelnen Komponenten des Gerätes. Für eine ordnungsgemäße Bereitstellung von Schlagsahne, die den geltenden gesundheitlichen Bestimmungen genügt und ihre Einhaltung garantieren kann, ist daher eine ordnungsgemäße Kühlung der Flüssigsahne von größter Wichtigkeit. Die Kühlvorrichtung sollte aber flexibel genug gestaltet sein, um unter unterschiedlichsten Betriebsbedingungen die Kühlung der Flüssigsahne bestmöglich zu gewährleisten. Dazu ist es wichtig, dass der Steuerung der Kühlvorrichtung Informationen über den Istwert der Sahnetemperatur bereitgestellt werden und somit für den Kühlvorgang berücksichtigt werden können. Eine thermostatische Temperaturregelung kann nun mit Hilfe eines am oder im Sahnetopf angeordneten Temperaturfühlers, der signaleingangsseitig mit der Steuereinheit verbunden ist, und mit einem Reglermodul, das die Sahnetemperatur auf einen vorgegebenen Sollwert einstellt, auf effektive Weise realisiert werden.

Die Temperatur der Flüssigsahne, die mit hoher Genauigkeit durch den Sahnetemperaturfühler bestimmt werden kann, ist gewissermaßen die Regelgröße, die in einem Regelkreis einem Sollwert der Temperatur nachgeregelt wird. Das Stellglied dieses Regelkreises ist der Kühlmittelkompressor, der bei Bedarf aktiviert bzw. eingeschaltet werden kann, wodurch der Kühlbehälter und der Sahnetopf bedarfsmäßig gekühlt werden.

Eine derartige thermostatische Temperaturregelung ist nicht auf Sahneautomaten beschränkt, deren Kühlvorrichtung auf dem Prinzip eines Kompressorkühlschranks beruht. Sie lässt sich im Prinzip auch vorteilhaft bei Sahneautomaten einsetzen, deren Kühleinheit in der Art eines Absorberkühlschranks oder eines thermoelektrischen Kühlschranks oder in sonstiger Weise realisiert ist.

Eine gesteigerte Sensitivität des Kühlkreislaufs bzw. des Regelkreises auf betriebliche Bedingungen sowie der Schutz vor unerwünschten Betriebszuständen wie beispielsweise dem Einfrieren der Komponenten des Kühlkreislaufs, der Schlagvorrichtung und der Flüssigsahne wird erreicht, indem die Steuereinheit signaleingangsseitig mit einem am oder im Kühlmittelverdampfer angeordneten Verdampfertemperaturfühler verbunden ist.

Weiterhin umfasst die Steuereinheit ein Diagnosemodul, das die vom Sahnetemperaturfühler und vom Verdampfertemperaturfühler gelieferten Temperaturmesswerte einer Plausibilitätsprüfung unterzieht und bei Auftreten einer Inkonsistenz oder eines Fühlerausfalls eine Störungsroutine aufruft. Im Normalbetrieb der Vorrichtung sollten die beiden gemessenen Temperaturen empirisch bestimmbaren Relationen genügen bzw. sich im Rahmen vorgegebener Wertebereiche bewegen. Eine starke absolute Abweichung der gemessenen Temperaturwerte von diesen Wertebereichen und/oder eine starke Diskrepanz der beiden gemessenen Temperaturen weist auf eine anomale, irreguläre Betriebssituation hin. Beispielsweise kann einer der Fühler technisch defekt sein und falsche Werte liefern bzw. vollständig ausfallen. Diese Situation kann durch das Diagnosemodul erkannt werden und dann in der Störungsroutine behandelt werden. Die Behandlung einer solchen Störung kann das Starten von Fehlerbehandlungsroutinen in der Steuereinheit umfassen sowie bedarfsweise das Ausgeben einer Alarmmeldung an den Benutzer des Gerätes, der je nach Art und Schwere der Situation entsprechende Maßnahmen ergreifen kann.

Um Abweichungen des Betriebszustandes der Vorrichtung von ihrem Normalzustand zu detektieren, umfasst die Plausibilitätsprüfung des Diagnosemoduls vorteilhafterweise einen Vergleich der Temperaturmesswerte von Sahnetemperaturfühler und Verdampfertemperaturfühler.

Das Diagnosemodul ist vorzugsweise derart konfiguriert, dass die Störungsroutine aufgerufen wird, sobald der Betrag der Differenz zwischen den beiden Temperaturmesswerten über einen vorgegebenen Mindestzeitraum hinweg einen vorgegebenen Schwellenwert überschreitet und/oder sobald zumindest einer der beiden Temperaturmesswerte einen ihm zugeordneten oberen Schwellenwert überschreitet oder einen ihm zugeordneten unteren Schwellenwert unterschreitet.

Die Absolutdifferenz bzw. Maximaldifferenz der am Sahnetopf und am Kühlmittelverdampfer gemessen Werte sollte einen gewissen oberen Schwellenwert nicht überschreiten. Das Überschreiten eines solchen Schwellenwertes deutet auf eine anomale Betriebssituation hin wie Fühlerausfall und/oder Fühlerdefekt, oder Ausfall von Komponenten, oder plötzliche Änderungen der Umgebungseinflüsse.

Des Weiteren können auch Über- oder Unterschreitungen der Temperaturmesswerte der einzelnen Fühler für sich gesehen auf Fehlfunktionen der Fühler und/oder geänderte Betriebsbedingungen hindeuten. In diesen Fällen verlässt die Vorrichtung den für den Normalbetrieb vorgesehenen Parameterbereich, und eine spezielle Behandlung der Ausnahmesituation durch die Störungsroutine kann Beeinträchtigungen oder Schäden an Sahnekonsument und/oder Gerät verhindern.

Vorteilhafterweise schaltet die Störungsroutine den Kühlmittelkompressor wechselweise an und aus, wobei fest vorgegebene Laufzeiten und Ruhezeiten vorgesehen sind, die in einem persistenten Speichermodul der Steuereinheit hinterlegt sind. Vorteilhafte Werte der Lauf- und Ruhezeiten können beispielsweise im Vorfeld empirisch ermittelt worden sein. Sie sind vorzugsweise so gewählt, dass weiterhin eine Kühlung der Sahne und die Aufrechterhaltung einer Sahnetemperatur, die keine gesundheitlichen Beeinträchtigungen beim Sahnekonsumenten hervorruft, gewährleistet werden. Der Aufruf der Störungsroutine findet, wie oben dargelegt, statt, wenn eine anomale betriebliche Situation aufgetreten ist. In einer solchen Situation ist eine verlässliche Temperaturinformationen von dem Sahnetemperaturfühler nicht zu erwarten, so dass eine thermostatische Kühlung nicht mehr durchgeführt werden kann.

In einer bevorzugten Ausführungsform umfasst die Steuereinheit ein Kühlkreislaufüberwachungsmodul, das den Kühlvorgang vorübergehend unterbricht und insbesondere den Kühlmittelkompressor abschaltet, sobald der vom Verdampfertemperaturfühler ermittelte Temperaturmesswert über einen vorgegebenen Mindestzeitraum hinweg einen vorgegebenen Schwellenwert unterschreitet oder sobald eine vorgegebene Laufzeit des Kühlmittelkompressors überschritten wird. Der Schwellenwert ist vorzugsweise so gewählt, dass bei niedrigeren Temperaturen das Einfrieren der Kühlkreislaufkomponenten und/oder anderer Komponenten droht, bei Temperaturen über diesem Schwellenwert aber gerade noch nicht stattfindet. Dadurch kann bei Bedarf die maximale Laufzeit des Kühlmittelkompressors ausgenutzt werden. Schäden an den Komponenten des Kühlkreislaufs, die durch den Einfriervorgang entstehen könnten, können so vermieden werden. Die vorgegebene Laufzeit kann beispielsweise empirisch ermittelt und in der Steuereinheit hinterlegt sein.

Damit die Flüssigsahne sich in dieser Situation nicht zu stark erwärmt, erweist es sich als vorteilhaft, wenn das Kühlkreislaufüberwachungsmodul den Kühlvorgang wieder fortsetzt, sobald der vom Verdampfertemperaturfühler ermittelte Temperaturmesswert einen vorgegebenen Schwellenwert überschreitet und/oder eine vorgegebene Ruhezeit eingehalten wurde.

In einer bevorzugten Ausführungsform der Vorrichtung umfasst ihre Steuereinheit Mittel zur Umschaltung von einem Tagmodus in einen Nachtmodus und umgekehrt, wobei im Nachtmodus die zur Schlagsahneentnahme vorgesehenen Komponenten, insbesondere ein Pumpenmotor und ein Magnetventil, deaktiviert und von einer zugehörigen Stromversorgungseinheit getrennt sind. Durch die Umschaltung in den Nachtmodus kann auf diese Weise Energie eingespart werden. Die Flüssigsahne im Kühlbehälter wird in diesem Modus weiterhin gekühlt. Eine derartige Maßnahme ist unabhängig von den Details des Kühlkreislaufes realisierbar.

Geräte bzw. Vorrichtungen zur Erzeugung von Schlagsahne oder ähnlicher bzw. verwandter Produkte müssen täglich gereinigt werden. Vorteilhafterweise ist daher die Steuereinheit derart konfiguriert, dass beim Umschalten auf den Nachtmodus eine Reinigungsaufforderung auf einem Display aktiviert wird, wobei bei der Einleitung eines Reinigungsvorgangs eine Abfolge der für die Reinigung erforderlichen Bedienschritte auf dem Display angezeigt wird, die vom Benutzer durch eine Bedieneingabe Schritt für Schritt quittiert werden müssen. Diese Konfiguration wird beispielsweise dem Betrieb der Vorrichtung im gastronomischen Bereich gerecht, wo nach Schließung des Lokals oder Cafés eine Reinigung des Gerätes vorteilhaft ist. Das Gerät verbleibt anschließend im Nachtmodus bis zum nächsten Tag. Die vorgesehene Quittierung der einzelnen Schritte stellt sicher, dass die Reinigung ordnungsgemäß ausgeführt wird. Auch eine derartige Maßnahme ist unabhängig von den Details des Kühlkreislaufes realisierbar.

Betriebsparameter der Vorrichtung sind vorteilhafterweise im Nachtmodus einstellbar oder programmierbar. Vorzugsweise erfolgt die Eingabe der Betriebsparameter über eine an die Steuereinheit angeschlossene Bedieneinheit und wird durch eine interaktive Menuführung auf einem zugehörigen Display unterstützt. Zusätzlich oder alternativ dazu lassen sich diese Parameter auch über einen an einer Datenschnittstelle der Steuereinheit (beispielsweise ein USB-Port) angeschlossenen PC einstellen bzw. modifizieren.

Die Betriebsparameter einer Vorrichtung zur Erzeugung von Schlagsahne lassen sich in Gruppen sortieren, die jeweils unterschiedliche Funktionsbereiche betreffen. So können beispielsweise Portionsgrößen der Sahneabgabe voreingestellt werden. Diese Einstellung sollte vom Benutzer vorgenommen werden können, da die benötigten Portionsgrößen je nach Angebot an Gerichten oder Speisen, für die die Sahne verwendet werden soll, variieren können. Andere Parameter betreffen die internen Prozesse der Vorrichtung, wie z.B. den Temperatursollwert bzw. die Betriebstemperatur der Flüssigsahne oder die Temperatur der Flüssigsahne, bei der ein Alarm ausgelöst werden soll. Aus diesen Gründen sind in der Vorrichtung vorzugsweise mehrere Bedienebenen vorgesehen, die jeweils durch unterschiedliche Passwörter geschützt sind, und die jeweils einen Zugriff auf unterschiedliche Gruppen von Betriebsparametern zulassen. Auch eine derartige Maßnahme ist unabhängig von den Details des Kühlkreislaufes realisierbar.

Die Steuereinheit der Vorrichtung umfasst vorteilhafterweise einen insbesondere als Ringspeicher ausgebildeten Betriebsdatenspeicher, in dem mit einem Zeitstempel versehene betriebsspezifische Daten zu einer vordefinierten Gruppe sensorisch und/oder dateneingabemäßig erfassbarer relevanter Betriebsereignisse, insbesondere bezüglich angeforderter und/oder durchgeführter Reinigungsvorgänge, automatisch abgespeichert werden. Diese Daten sind vorzugsweise im Werk über eine mit der Steuereinheit verbundene Schnittstelle auslesbar und ermöglichen eine Analyse der Maschinenhistorie und darauf aufbauend Erkenntnisse und Prognosen bezüglich fälliger Service- oder Wartungsarbeiten. Darüber hinaus kann es sinnvoll sein, in periodischen Abständen Messwerte oder Betriebsereignisse abzuspeichern, die für eine Kontrolle der Einhaltung hygienischer Vorschriften wichtig sind.

Die Steuereinheit umfasst weiterhin vorteilhafterweise eine Leckageüberwachung, die Undichtigkeiten innerhalb der Maschine prüft. Dies betrifft im Wesentlichen Undichtigkeiten der Pumpe. Die Leckageüberwachung kann hardware- und/oder softwaremäßig als Unterprogramm oder Routine in der Steuereinheit implementiert sein.

Die Interaktion des Benutzers mit der Vorrichtung sollte so intuitiv und komfortabel wie möglich gestaltet sein. Dazu eignet sich in besonderer Weise eine an die Steuereinheit angeschlossene Bedieneinheit, die als berührungsempfindliches Touch-Panel ausgebildet ist bzw. ein solches Touch-Panel umfasst. Durch Fingerberührung des Touch-Panels lassen sich so verschiedene Bedienwünsche effektiv und schnell umsetzten. Auch eine derartige Maßnahme ist unabhängig von den Details des Kühlkreislaufes realisierbar. Das heißt, ein derartiges Touch-Panel als Bedieneinheit kann auch bei Sahneautomaten vorteilhaft sein, die keinen Kompressorkühlkreislauf, sondern eine andersartige Kühleinrichtung aufweist.

Das Touch-Panel weist vorzugsweise eine im Wesentlichen transparente Glasplatte mit einer als Berührfläche vorgesehenen Vorderseite und einer Rückseite auf, wobei die Rückseite mit farbigen Bediensymbolen bedruckt oder beschichtet oder mit einer entsprechenden Folie belegt oder beklebt ist. Alternativ dazu kann auch ein einfarbiges Schema verwendet werden. Für die Rückseite der Glasplatte, die vorzugsweise auf Mineralglas basiert, wird eine besonders hohe Kratzfestigkeit erreicht, wenn die Bediensymbole als (mehrfarbige) Lackschicht auf der Glasfläche aufgebracht sind, wobei die Lackschicht in die Glasfläche eingebrannt wird.

Die Berührungsempfindlichkeit des Touch-Panels wird vorzugsweise durch ein kapazitives Funktionsprinzip realisiert. Dazu können hinter den Bediensymbolen kapazitive Näherungssensoren angebracht sein, die sensitiv auf die Berührung der Glasfläche über dem entsprechenden Bediensymbol mit einem Finger reagieren. Die Näherungssensoren sind vorzugsweise derart konfiguriert, dass sie auf Bedienvorgänge mit dem Finger reagieren, nicht aber bei z.B. Wischvorgängen während der Reinigung der Glasfläche ansprechen.

Die Vorrichtung zur Erzeugung von Schlagsahne umfasst vorteilhafterweise eine Pumpe zum Transport der Flüssigsahne vom Sahnetopf über ein Schlagsystem zu einem durch ein Magnetventil verschließbaren Auslauf, wo die geschlagene Sahne entnehmbar ist, wobei das Magnetventil und die Pumpe auf eine entsprechende Bedienaufforderung hin über die Steuereinheit angesteuert werden, und wobei die Steuereinheit derart konfiguriert ist, dass das Wiederverschließen des Magnetventils nach erfolgter Öffnung um eine vorgegebene Zeitspanne gegenüber dem Abschaltzeitpunkt der Pumpe verzögert wird. Diese verzögerte Schließung führt dazu, dass sich der in dem Schlagsystem während des Schlagens der Sahne aufgebaute Druck abbauen kann. Die Verzögerungszeitspanne beträgt dabei vorzugsweise ungefähr 0,5 Sekunden. Auch diese Maßnahme ist von den Details der Kühleinrichtung unabhängig.

Die Vorteile der Erfindung liegen insbesondere darin, dass durch eine thermostatische Temperaturregelung, bei der der Ist-Temperaturwert der Sahne mit einem Temperaturfühler in oder am Sahnetopf gemessen wird, eine flexible und zuverlässige Kühlung der Flüssigsahne gewährleistet wird. Mit Hilfe des zweiten Temperaturfühlers am Verdampfer der Vorrichtung kann eine besonders zuverlässige und fehlertolerante Temperaturregelung erreicht werden. Durch einen in der Steuereinheit integriertes Diagnosemodul können Plausibilitätschecks durchgeführt werden und so anomale Betriebszustände wie beispielsweise der Ausfall eines oder beider Temperaturfühler erkannt und von der Störungsroutine behandelt werden.

Ein Ausführungsbeispiel der Erfindung wird anhand einer Zeichnung näher erläutert. Darin zeigen in stark schematisierter Darstellung:
- Fig. 1: eine Vorrichtung zur Erzeugung von Schlagsahne in einer seitlichen Ansicht,
- Fig. 2: die Vorrichtung aus Fig. 1 in einer weiteren seitlichen Ansicht mit gegenüber der Fig. 1 entgegengesetzter Blickrichtung,
- Fig. 3: die Vorrichtung aus Fig. 1 und 2 in einer hinteren Ansicht, und
- Fig. 4: eine Bedieneinheit der Vorrichtung gemäß Fig. 1 bis 3.

Gleiche Teile sind in allen Figuren mit denselben Bezugszeichen versehen. Aus Gründen der darstellerischen Vereinfachung und der besseren Übersicht halber enthalten die einzelnen Figuren nicht immer alle Teile der Vorrichtung. Das Gehäuse der Vorrichtung ist in allen Figuren weggelassen.

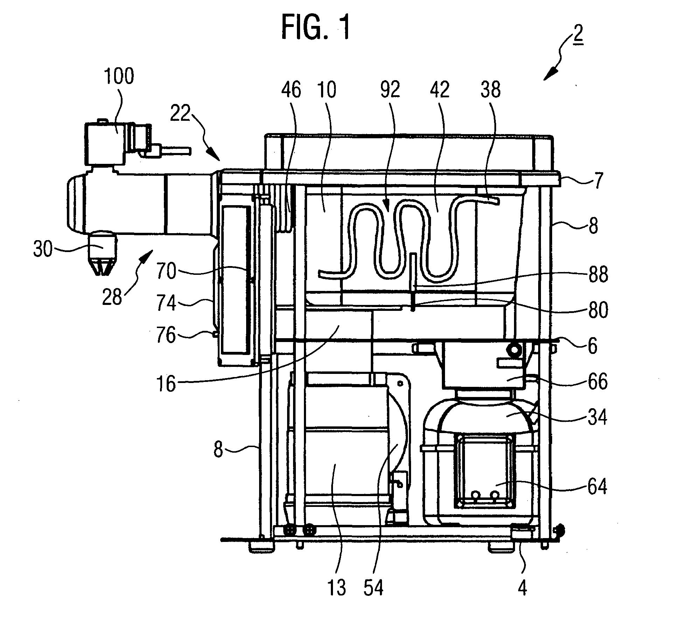

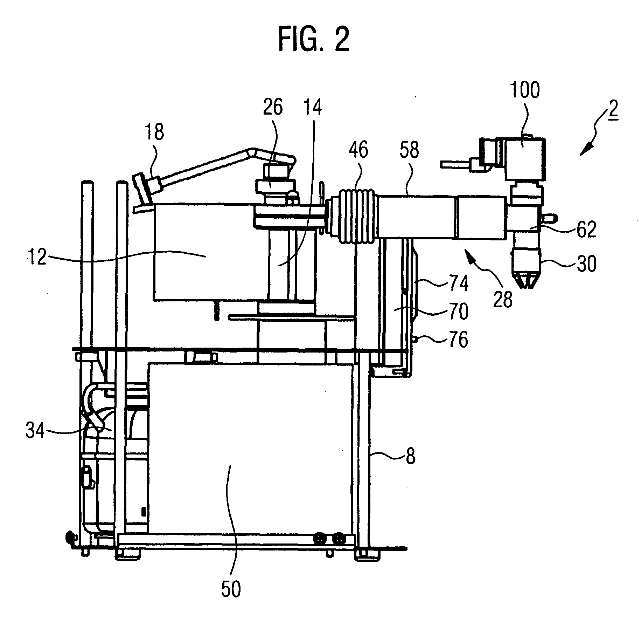

Die in den Fig.1 und 2 dargestellte Vorrichtung 2 zur Erzeugung von Schlagsahne oder ähnlichen Produkten weist eine Grundplatte 4, eine Zwischenplatte 6 und eine Deckfläche 7 auf. Die verschiedenen Platten 4, 6, 7 werden durch Abstandshalter 8 auf konstantem Abstand zueinander gehalten, wobei für die Abstandshalter 8 zwischen Grundplatte 4 und Zwischenplatte 6 bzw. zwischen Zwischenplatte 6 und Deckfläche 7 verschiedene Längen vorgesehen sein können. Das Gehäuse kann beispielsweise eine oder mehrere Frontflächen und einen Gehäusemantel umfassen, der die seitlichen Bereiche und den hinteren Bereich der Vorrichtung abdeckt. Durch die nichttragende Funktion der Frontflächen und des Gehäusemantels wird eine größtmögliche Montagefreiheit durch hervorragende Zugänglichkeit, insbesondere bei Reparaturarbeiten, gewährleistet.

Zur Erzeugung von Schlagsahne aus Flüssigsahne, die in einen im Kühlbehälter 10 eingelassenen, herausnehmbaren Sahnetopf 12 gefüllt werden kann und dort gekühlt wird, wird die Flüssigsahne von einer von einem Pumpenmotor 13 angetriebenen Pumpe 14, die durch den Motorflansch 16 mit dem Pumpenmotor 13 verbunden ist, durch das Saugrohr 18 in die Schlagvorrichtung 22 gepumpt. Die Luftbeimischung wird dabei durch die Luftregulierung 26 geregelt. Die geschlagene Sahne kann dann nach Durchlauf durch den Auslauf 28 an der Garniertülle 30 entnommen werden.

Die Vorrichtung 2 eignet sich zur Herstellung von schlagsahneähnlichen Produkten (also Produkten, die unter Beimischung von Luft geschlagen werden) aus beispielsweise Eiweiß, Milch, Joghurt sowie von Sahneersatzprodukten.

Die Luftregulierung 26 ist als ein Mitnahme- bzw. Unterdruckventil ausgeführt, das sich abhängig vom Durchsatz der Sahne durch die Schlagvorrichtung 22 öffnet und so Luft unter die Sahne mischt. Die Luftregulierung 26 arbeitet gewissermaßen nach dem Prinzip einer Venturidüse und kann als solche ausgestaltet sein.

Die Kühlung der im Sahnetopf 12 befindlichen Flüssigsahne wird durch einen Kühlkreislauf realisiert, durch den der Kühlbehälter 10 gekühlt wird. Ein Kühlmittelkompressor bzw. Kältekompressor 34, der im Folgenden auch als Kältekapsel bezeichnet wird, pumpt das in diesem Abschnitt flüssige Kühlmittel in die Kälteschlange 38 der Kälteleitplatte 42, wo es zumindest teilweise verdampft. Die Kälteplatte 42 ist beispielsweise außen seitlich an dem Kühlbehälter 10 angebracht oder bildet eine seiner Seitenwände. Die Kälteschlange 38 ist auf der dem Kühlbehälter 10 abgewandten Seite auf der Kälteleitplatte 42 angebracht. Von dort strömt das Kältemittel in die Kühlschlange 46 des Auslaufes 28, von wo es weiter in den Verflüssiger 50 strömt, der von einem Ventilator 54 gekühlt wird. Im Verflüssiger 50 gibt das Kühlmittel die in der Kälteschlange 38 aufgenommene Wärmeenergie wieder an die Umgebung ab. Von dort fließt das Kühlmittel zurück in den Kältekompressor 34, der das Kühlmittel verdichtet und den Kühlkreislauf antreibt. Die Gesamtheit dieser Komponenten stellt die Kälteeinheit der Vorrichtung 2 dar. Kälteschlange 38 und Kälteleitplatte 42 bilden den (Kühlmittel-) Verdampfer 92, in dem das durchströmende Kühlmittel verdampft und dadurch der Umgebung, speziell dem Kühlbehälter 10, Wärme entzieht.

Die Kühlschlange 46 ist mit einem Kälteleitrohr 58 verbunden, das auf diese Weise gekühlt wird. Das Kälteleitrohr 58 umgibt als Ummantelung das Schlagrohr (nicht eingezeichnet), durch das die Sahne aus der Schlagvorrichtung 22 bis zum dem Ende der Schlagvorrichtung 22, dem Ausgangsstück 62 und weiter zur Garniertülle 30 geleitet wird. Die Kühlung des Kälteleitrohrs 58 stellt sicher, dass die geschlagene Sahne bis zu ihrer Entnahme und ebenso die in der Vorrichtung 2 verbauten Komponenten bis zur Garniertülle 30 gekühlt bleiben. Der Kältekompressor 34 wird über eine Anschlusseinheit 64 mit Strom versorgt. Die Vorrichtung 2 umfasst weiterhin einen Transformator 66, der die einzelnen Komponenten mit für sie richtig dimensionierten und ungefährlichen Strömen bzw. Spannungen beaufschlagt.

Die Vorrichtung 2 kann in verschiedenen Betriebsmodi betrieben werden und erlaubt die Durchführung spezieller Programme bzw. Routinen. Die Durchführung dieser speziellen Modi und Programme wird durch eine Steuereinheit 70, in die vorzugsweise ein persistenter Speicher integriert ist, erreicht. Hierzu eignet sich beispielsweise ein 8-Bit Mikroprozessor mit einem Flash Speicher. Mit der Steuereinheit kann ein Benutzer über eine Bedieneinheit 74 interagieren. Die Bedieneinheit 74 ist dabei zweckmäßigerweise an einer von dem Benutzer leicht und komfortabel zu erreichenden Stelle der Vorrichtung 2 angeordnet und mit der Steuereinheit 70 über Signalleitungen verbunden. Die von dem Benutzer an der Bedieneinheit 74 gewählten Aktionen werden der Steuereinheit 70 übermittelt. Diese kann durch Anzeigen auf der Bedieneinheit 74 (z.B. durch LEDs) oder einem Display 76 den Benutzer vom aktuellen Zustand der Vorrichtung und/oder dem aktuell ablaufenden Programm unterrichten.

Für den Betrieb der Vorrichtung 2 sind zwei verschiedene Betriebszustände oder Betriebsmodi vorgesehen, die im Folgenden als Tagmodus und als Nachtmodus bezeichnet werden und vom Benutzer an der Bedieneinheit 74 aktiviert werden können. Beim Umschalten des Betriebsmodus von dem Tagmodus in den Nachtmodus oder umgekehrt veranlasst die Steuereinheit 70 die nötigen Vorgänge in der Vorrichtung 2.

Der als Tagmodus bezeichnete Betriebszustand der Vorrichtung 2 ist der aktive Betriebszustand, in dem der Vorrichtung 2 Sahne entnommen werden kann. Dieser Betriebszustand ist gewöhnlich der einzige Betriebszustand bekannter Vorrichtungen zur Erzeugung von Schlagsahne. Die gewünschte Portionsgröße der Sahne lässt sich über die Bedieneinheit 74 einstellen. Dazu sind vorteilhafterweise drei vorangelegte Portionsgrößen an der Bedieneinheit 74 wählbar. Dazu können beispielsweise drei verschiedene, beispielsweise als Taster, oder als Schaltflächen ausgebildete Bedienelemente an der Bedieneinheit 74 vorgesehen sein.

Die Vorrichtung 2 lässt sich vom Tagmodus in den Nachtmodus umschalten. Der Nachtmodus ist insbesondere zum Einstellen der Betriebsparameter, zur Wartung und zur Reinigung der Vorrichtung 2 vorgesehen. Die Entnahme von Sahne ist im Nachtmodus gesperrt. Die Steuereinheit 70 reduziert im Nachtmodus die Stromversorgung bzw. Stromaufnahme der Vorrichtung 2 auf einen möglichst geringen Wert. Die Kühlung des Kühlbehälters 10 wird auf diese Weise aufrechterhalten, während alle Komponenten der Vorrichtung 2, die zur Bereitstellung bzw. Ausgabe von Schlagsahne benötigt werden, deaktiviert sind. Zum Beispiel werden ein Magnetventil 100, das zur Entnahme von Sahne geöffnet wird, und der Pumpenmotor 13 der Pumpe 14, der im Tagesmodus in einem Standby-Modus läuft, wenn keine Sahne entnommen wird, vollständig durch die Steuerung deaktiviert. Zudem wird die Anzahl der in der Steuereinheit 70 ablaufenden Routinen auf die ausschließlich zur Sahnekühlung notwendigen Routinen beschränkt.

Die Steuereinheit 70 ist mit zwei Temperaturfühlern verbunden, welche beispielsweise PTC-Fühler (engl. Positive Temperature Coefficient) sein können, d.h. Widerstandsfühler, deren elektrischer Widerstand sich bei steigender Temperatur erhöht. Ein Sahnetemperaturfühler 80 ist an der Unterseite des vorzugsweise gut wärmeleitfähigen Sahnetopfes 12 angebracht und ermittelt dadurch in guter Näherung die Temperatur der Sahne im Sahnetopf 12. Ein Verdampfertemperaturfühler 88 bzw. Kälteeinheitstemperaturfühler ist auf der Kälteleitplatte 42 angebracht und ermittelt die in diesem Bereich vorherrschende Temperatur. Die von den Temperaturfühlern 80 und 88 gemessenen Temperaturwerte werden kontinuierlich oder in diskreten zeitlichen Abständen an die Steuereinheit 70 übermittelt. Die Steuereinheit 70 vergleicht die am Sahnetopf 12 und am Verdampfer 92 gemessenen Temperaturen miteinander und regelt die Kühlung der im Sahnetopf 12 befindlichen Flüssigsahne basierend auf diesen Messwerten und ihrem Vergleich.

Wenn der Sahnetemperaturfühler 80 eine Temperatur misst, die größer als ein vorgegebener Schwellenwert von z.B. 8 °C ist, löst die Steuereinheit 70 einen Temperaturalarm aus. Eine solche Situation kann beispielsweise bei der Inbetriebnahme der Vorrichtung 2 oder beim Einfüllen von zu warmer Flüssigsahne in den Sahnetopf 12 auftreten. Unabhängig davon oder als Folge des Temperaturalarms wird eine Schockkühlung der Flüssigsahne gestartet, deren Ablauf als Schockkühlprogramm Hardware- und/oder Software-mäßig in der Steuereinheit 70 implementiert ist. Die Schockkühlung wird beispielsweise gestartet, wenn der Sahnetemperaturfühler 80 eine Temperatur misst, die größer als ein vorgegebener Schwellenwert (Freigabetemperatur), beispielsweise 7 °C, ist. Die Freigabetemperatur bezeichnet den vorgeschriebenen Maximalwert der Sahnetemperatur. Beim Erreichen der Freigabetemperatur kann eine optische Warnung, beispielsweise auf einem mit der Steuereinheit 70 signalmäßig verbundenen Display, ausgegeben werden.

Die Flüssigsahne im Sahnetopf 12 wird hierbei schnellstmöglich auf eine einstellbare Temperatur der Sahne im Sahnetopf 12 von z.B. unter 5 °C herunter gekühlt. Der Schwellenwert der Temperatur, bei dem das Schockkühlprogramm ausgelöst wird und auf den die Flüssigsahne im Rahmen der Schockkühlung herunter gekühlt werden soll, kann in der Steuereinheit 70 werkseitig eingestellt und hinterlegt werden gemäß den gültigen HACCP-Richtlinien (engl. Hazard Analysis and Critical Control Point, im deutschen Recht z.B. verankert in der Lebensmittelhygiene-Verordnung). Während des Herunterkühlens werden die Temperatur im Sahnetopf 12 mit Hilfe des Sahnetemperaturfühlers 80 und die Temperatur des Verdampfers 92 mit Hilfe des Verdampfertemperaturfühlers 88 überwacht.

Die Schockkühlung wird normalerweise beendet, wenn die Temperatur der Flüssigsahne, gemessen durch den Sahnetemperaturfühler 80, auf z.B. unter 4 °C (dies ist ein einstellbarer Wert) gesunken ist. Darüber hinaus kann eine vorübergehende Unterbrechung der Schockkühlung vorgesehen sein, wenn die maximal zulässige Laufzeit der Kälteeinheit erreicht ist. Die Schockkühlung nutzt nämlich gegebenenfalls die maximal zulässige Laufzeit der Kälteeinheit aus. Ein Betrieb der Kälteeinheit über die maximale Laufzeit hinaus würde zum Einfrieren der flüssigen Rohsahne sowie der Schlagvorrichtung 22 führen. Die maximal zulässige Laufzeit ist erreicht, wenn die vom Verdampfertemperaturfühler 88 gemessene Temperatur am Verdampfer 92 einen vorgegebenen Schwellenwert unterschreitet oder wenn ein vorgegebener, beispielsweise empirisch ermittelter, Wert für die Maximallaufzeit überschritten ist.

Bei Ablauf der so bestimmten maximal zulässigen Laufzeit wird die Schockkühlung unterbrochen. Dadurch werden Schäden an der Kältekapsel und (im Betriebsmodus) an der Pumpe 14 verhindert. Nach der Unterbrechung der Schockkühlung wird gewartet, bis der vom Verdampfertemperaturfühler 88 gemessene Temperaturwert wieder in einem unkritischen Bereich liegt bzw. einen vorgegebenen Schwellenwert überschreitet oder bis eine in der Steuereinheit 70 hinterlegte Ruhezeit von beispielsweise 15 Minuten abgelaufen ist. Dieser Schwellenwert für die Fortsetzung der Schockkühlung kann mit dem Schwellenwert für die Unterbrechung der Schockkühlung (z.B. 4 ° C für den Sanetopftemperaturfühler 80) übereinstimmen oder auch etwas höher gewählt sein. Alternativ wird eine vorgegebene, in der Steuereinheit hinterlegte Ruhezeit abgewartet und dann die gewissermaßen im Pause-Modus befindliche Schockkühlung erneut aktiviert, bis das angestrebte Regelungsziel (z.B. 4 ° C) erreicht ist.

In der Steuereinheit 70 ist des Weiteren ein Einfrierschutz Hardware- und/oder Software-mäßig implementiert, welcher bedarfsweise aktivierbar ist oder in bestimmten Betriebssituationen automatisch aktiviert wird oder alternativ ständig im Hintergrund läuft und ein Notlaufprogramm umfasst. Dazu ist in der Steuereinheit 70 die maximal zulässige Laufzeit der Kältekapsel hinterlegt, bevor die Sahne in der Schlagvorrichtung 22 einfriert. Die maximal zulässige Laufzeit wurde zuvor bei der Produktentwicklung beispielsweise im Rahmen von Versuchsreihen empirisch ermittelt. Im einfachsten Fall ist nur eine einzige Kühlleistungsstufe vorgesehen und dementsprechend ein einziger Zahlenwert für die maximal zulässige Laufzeit der Kältekapsel hinterlegt. Erweiterungen mit mehreren Kühlleistungsstufen und jeweils zugehörigen maximal zulässigen Laufzeiten sind denkbar. Weiterhin sind empirisch ermittelte Werte für die notwendigen Ruhezeiten der Kältekapsel, die zwischen aktiven Kühlungsphasen eingelegt werden müssen, in der Steuereinheit 70 hinterlegt. Der Einfrierschutz überwacht somit sowohl die (maximale) Laufzeit als auch die Ruhezeiten der Kältekapsel. Die Werte für die Laufzeiten und die Ruhezeiten sind derart gewählt bzw. empirisch bestimmt, dass eine ausreichende Kühlung der Sahne bei gleichzeitiger Verhinderung des Einfrierens der Kälteeinheit gewährleistet wird. Diese Werte sind werkseitig in der Steuereinheit 70 hinterlegbar und bei Bedarf verstellbar.

Das Notlaufprogramm wird insbesondere dann aktiviert, wenn die Steuereinheit 70 einen Fehler in der Temperaturerkennung, z.B. am Sahnetemperaturfühler 80 oder am Verdampfertemperaturfühler 88, feststellt, z.B. einen Totalausfall des jeweiligen Temperaturmesswertes oder eine außergewöhnlich hohe Diskrepanz (Differenz) zwischen den Messwerten der beiden Temperaturfühler oder auch einen unüblich hohen oder tiefen Absolutwert des jeweiligen Fühlers. Eine derartige Plausibilitätsprüfung der Messwerte und ein bei negativem Prüfungsergebnis ggf. eingeleiteter Alternativbetrieb mit festen Lauf- und Ruhezeiten des Kältekompressors ist nicht auf den weiter oben beschriebenen Schockkühlmodus beschränkt, sondern kann ganz allgemein für jeglichen Betriebsmodus vorgesehen sein. Der Steuereinheit 70 stehen in diesem Fall keine bzw. keine verlässlichen Informationen über die Temperatur der Sahne im Sahnetopf 12 bzw. am Verdampfer 92 zur Verfügung. Das Notlaufprogramm steuert dann die Kälteeinheit mit festen Zeitvorgaben für Lauf- und Ruhezeiten, deren Werte in der Steuereinheit 70 werkseitig eingestellt und hinterlegt werden können und so gewählt sind, dass eine ausreichende Kühlung der Flüssigsahne gewährleistet ist. Die Lauf- und Ruhezeiten können in der Steuereinheit 70 hinterlegt werden bzw. bei Bedarf angepasst werden.

In der Steuereinheit 70 ist weiterhin ein Kapselschutzprogramm hardware- und/oder softwaremäßig implementiert. Das Kapselschutzprogramm sorgt dafür, dass nach Beendigung des Kühlintervalls eine (in der Steuereinheit 70 einstellbare und hinterlegbare) Ruhezeit bzw. Pause von beispielsweise 2 Minuten eingehalten wird, bevor die Kälteeinheit erneut zu laufen beginnen kann. Das Kapselschutzprogramm trägt auf diese Weise zu einer Entspannung des Drucks im Kühlkreislauf bei, wodurch die Lebenszeit der Kältekapsel erhöht wird.

Schockkühlprogramm, Kapselschutzprogramm, Einfrierschutz, Notlaufprogramm und ein Diagnoseprogramm für die Fehlererkennung, z.B. von fehlerhaften Messungen des Sahnetemperaturfühlers 80 und/oder des Verdampfertemperaturfühlers 88, sind als miteinander interagierende und kommunizierende Programme in der Steuereinheit 70 implementiert. Mit ihrer Hilfe kann gleichzeitig sichergestellt werden, dass einerseits die Flüssigsahne nur für möglichst kurze Zeitspannen Temperaturen über z.B. ca. 7 °C (Freigabetemperatur) ausgesetzt ist, und dass andererseits die anderen Komponenten der Schlagvorrichtung 22 nicht einfrieren. Dadurch wird die Pumpe 14 vor zu großen Belastungen geschützt und vor Beschädigungen bewahrt. Diese Maßnahmen erhöhen zudem die Lebenszeiten der einzelnen Komponenten.

Die Steuereinheit 70 ist mit einer Leckageüberwachung ausgestattet, die Undichtigkeiten innerhalb der Maschine prüft. Bei Undichtigkeit erscheint eine Alarmmeldung im Display.

Alternativ zur Leckageüberwachung ist in der Steuereinheit 70 eine Maschinenabschaltungsroutine hinterlegt, wobei der (minimale) Füllstand bzw. der Leerzustand des Sahnebehälters erfasst wird. Dies wird beispielsweise über eine Leitfähigkeitsmessung erreicht. Ist der Behälter leer, erfolgt im Display eine Meldung und die Sahneentnahme ist gesperrt.

Im normalen Betriebszustand der Vorrichtung 2 wird die Kühlung der Flüssigsahne durch die Steuereinheit 70 in Abhängigkeit von den von dem Sahnetemperaturfühler 80 und/oder dem Verdampfertemperaturfühler 88 gemessenen Temperaturwerten geregelt. Ein Rückgriff auf fest vorgegebene bzw. fest eingestellte Lauf- und Ruhezeiten der Kältekapsel ist dann weder erforderlich noch gewünscht. Vorzugsweise wird die vom Sahnetemperaturfühler 80 gemessene Temperatur der Sahne im Sahnetopf 12 als Istwert-Größe für die thermostatische Temperaturregelung herangezogen, während die vom Verdampfertemperaturfühler 88 gemessene Temperatur wie oben beschrieben hauptsächlich zur Plausibilitätskontrolle des vom Sahnetemperaturfühler 80 gemessenen Temperaturwertes und zur Überwachung des Kühlkreislaufs auf ein bevorstehendes und zu vermeidendes Einfrieren verwendet wird.

Die Kühleinheit wird im Rahmen der thermostatischen Temperaturregelung bedarfsweise aktiviert, so dass die Flüssigsahne auf einer Betriebstemperatur bzw. einem Temperatursollwert von z.B. ca. 2° - 6 °C gehalten werden kann, wobei dieser Wert in der Steuereinheit 70 werkseitig eingestellt und hinterlegt werden kann. Wird dieser Sollwert von dem vom Sahnetemperaturfühler 80 gemessenen Temperatur-Istwert der Sahne um einen einstellbaren Toleranzwert überschritten, wird der Kältekompressor 34 eingeschaltet. Während der Kältekompressor läuft und somit die Flüssigsahne im Kühlbehälter 10 kühlt, überwacht die Steuereinheit 70 die Werte beider Temperaturfühler 80, 88. Der Kältekompressor 34 wird wieder deaktiviert, wenn der Sahnetemperaturfühler 80 anzeigt, dass die Sahne wieder die gewünschte Temperatur, in diesem Beispiel ca. 4 °C, erreicht hat. Der Kältekompressor 34 kann darüber hinaus, wie weiter oben bereits beschrieben, auch vorübergehend deaktiviert werden, wenn der Verdampfertemperaturfühler 88 anzeigt, dass die Kälteeinheit und die Schlagvorrichtung 22 kurz vor dem Einfrieren stehen oder wenn eine vorgegebene maximale Laufzeit überschritten ist. Dieser Fall tritt im vorgesehenen Normalbetrieb der Vorrichtung jedoch gewöhnlich nicht auf, sondern ist, wie oben beschrieben, vor allem für das Schockkühlprogramm von Bedeutung.

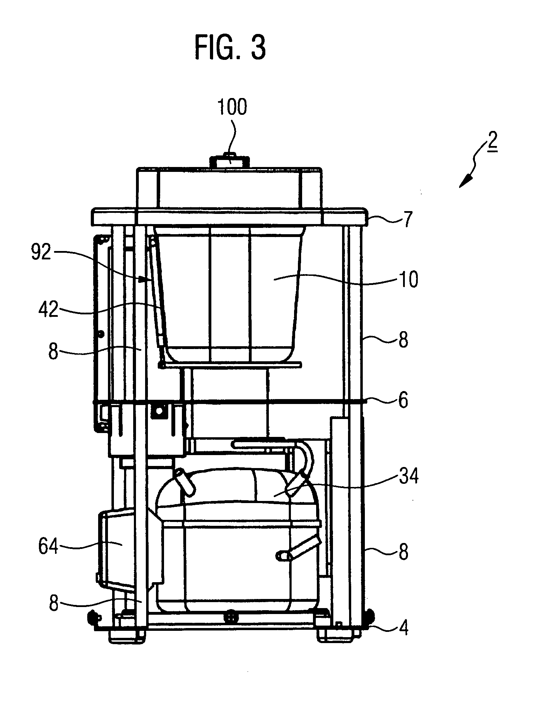

Die Anordnung der Kälteleitplatte 42 in Bezug auf den Kühlbehälter 10 ist in Fig. 3 erkennbar. Die Kälteschlange 38 ist auf die Kälteleitplatte 42 auf der dem Kühlbehälter abgewandten Seite gut wärmeleitend aufgebracht und beispielsweise aufgelötet.

Aus hygienischen und technischen Gründen müssen Sahnemaschinen in geeigneten zeitlichen Intervallen (z.B. täglich) einer Reinigung unterzogen werden. In der Steuereinheit 70 der Vorrichtung 2 sind zu diesem Zweck Hardware- und/oder Software-mäßig Programme implementiert, die zu einer Reinigung der Vorrichtung 2 auffordern und den Benutzer interaktiv durch die Reinigungsprozedur führen. Die Steuereinheit 70 fordert den Benutzer zur Reinigung der Vorrichtung 2 auf, wenn der Benutzer den Nachtmodus aktiviert, wenn die Vorrichtung 2 in Betrieb genommen wird, oder wenn ein vorgegebenes, einstellbares Zeitintervall, z.B. die zulässige Gesamtbetriebsdauer seit der letzten Reinigung, erreicht ist. Über die Bedieneinheit 74 kann die Reinigungsaufforderung (für eine vorgegebene Zeitspanne) deaktiviert werden. Sie kann auch an der Bedieneinheit 74 bestätigt werden. Der Benutzer wird dann über Lauftext in einem Display 76 durch die erforderlichen Bedienschritte der Vorrichtung 2 geführt. Diese können beispielsweise das Einfüllen von warmem oder kaltem Wasser, ggf. unter Zugabe eines Reinigungsmittels, in vorgegebenen Mengen in die Vorrichtung 2 umfassen. In einer bevorzugten Ausführung sind, soweit möglich, Sensoren bzw. Parameter vorgesehen, die die (ordnungsgemäße) Durchführung der einzelnen Reinigungsschritte durch den Benutzer registrieren und quittieren und erst nach erfolgreichem Abschluss eines Schrittes den nächsten Reinigungsschritt bzw. die Aufforderung dazu aktivieren.

Der Benutzer kann während der Reinigungsprozedur mit der Vorrichtung 2 bzw. ihrer Steuereinheit 70 über die Bedieneinheit 74 interagieren und beispielsweise die Einfüllvorgänge bestätigen. Die Reinigung betrifft dabei vorrangig, aber nicht ausschließlich, die Komponenten der Maschine, die die Sahne enthalten bzw. durch die die Sahne geleitet wird. Zu vorgegebenen und in der Steuereinheit 70 hinterlegten, werkseitig einstellbaren Zeitpunkten kann der Benutzer auch zur Reinigung der Luftregulierung aufgefordert werden. Nach Ablauf weiterer vorgegebener, werkseitig einstellbarer Zeitintervalle kann der Benutzer aufgefordert werden, einen Servicetechniker für die Maschine zu bestellen. Die Reinigungsprozedur besteht vorteilhafterweise aus drei Stufen, die beispielsweise als Vorreinigung, Hauptreinigung und Nachreinigung bezeichnet werden können. Diese Stufen unterscheiden sich in der Verwendung von Reinigungsmittel, der Wassertemperatur, der Zeitintervalle und ggf. anderen Parametern.

Diese Reinigungsautomatik steuert bei jedem Reinigungsintervall bzw. in jeder Reinigungsstufe, z.B. der Vorreinigung, den Pumpenmotor und das Magnetventil 100 in gewissen Intervallen an, wobei beispielsweise 36 zeitliche Intervalle gewählt werden. Das Magnetventil 100 öffnet und schließt dann je Reinigungsstufe 36 mal und der Pumpenmotor 13 läuft 36 mal an und stoppt wieder.

In der Steuereinheit 70 ist ein Ringspeicher (nicht eingezeichnet) zur Speicherung der die Reinigungsintervalle und -prozeduren betreffenden Daten vorgesehen. Der Speicherzeitraum beträgt vorteilhafterweise mindestens 1 Jahr. Die auf diese Weise erfassten Daten umfassen vorzugsweise die Anzahl der vorschriftsmäßig durchgeführten Reinigungen sowie ihre Zeitpunkte. Weiterhin kann erfasst werden, wann und wie oft Reinigungsaufforderungen der Steuereinheit 70 (temporär) ignoriert oder deaktiviert worden sind. Zusätzlich dazu kann erfasst werden, wie viele Reinigungen vor Ende der vorschriftsmäßigen Prozedur vom Benutzer abgebrochen wurden. Vorteilhafterweise ist die Steuereinheit 70 mit einer Schnittstelle (nicht eingezeichnet) ausgestattet, über die die Daten maschinell ausgelesen werden können. Es kann sich beispielsweise um eine USB-Schnittstelle (eng. Universal Serial Bus) handeln. Eine Analyse diese Daten kann dann Aufschluss über den Umgang und Zustand der Vorrichtung 2 und ggf. notwendige Reparatur-, Austausch- und/oder Wartungsarbeiten geben.

Für den Betrieb der Vorrichtung 2 ist ferner vorgesehen, dass die Steuereinheit 70 fortwährend die von den Temperaturfühlern 80 und 88 gemessenen Werte analysiert und beispielsweise mit Referenzwerten und/oder in der Steuereinheit 70 hinterlegten Sollwerten vergleicht. Dadurch können starke Abweichungen von Sollwerten bzw. starke Schwankungen der gemessenen Werte in Echtzeit erkannt werden. Es werden also gewissermaßen alle in der Steuereinheit 70 hinterlegten Parameter mit den aktuellen, in der Vorrichtung 2 gemessenen Werten abgeglichen. Bei zu großen Irregularitäten oder Unstimmigkeiten kann auf dem Display 76 eine Störungsmeldung ausgegeben werden. Optional kann gleichzeitig der Schweregrad der Störung angegeben werden. Bei leicht behebbaren Störungen können Maßnahmen zu ihrer Behebung auf dem Display 76 angezeigt werden. Bei schwerwiegenden Störungen kann eine Meldung über die Notwendigkeit einer fachmännischen Reparatur ausgegeben werden.

Bei extrem schwerwiegenden Störungen wird die Vorrichtung 2 vorteilhafterweise in einen geeigneten, reduzierten Betriebsmodus (beispielsweise ein Notlaufprogramm) versetzt bzw. ganz ausgeschaltet. Die oben genannten Prozeduren können beispielsweise als Diagnoseprogramm in der Steuereinheit 70 implementiert sein.

Die Interaktion des Benutzers mit der Vorrichtung 2 kann durch ein mit der Bedieneinheit 74 und/oder der Steuereinheit 70 verbundenes Display 76 stark vereinfacht und komfortabel gestaltet werden. Das Display 76 kann im normalen Betriebszustand der Vorrichtung 2 zur Anzeige der Uhrzeit, des Betriebszustandes und der Sahnetemperatur, gemessen durch den Sahnetemperaturfühler 80, verwendet werden. Beispielsweise in Form eines Lauftextes können auf dem Display 76 auch Störungsmeldungen und/oder Alarmmeldungen, ggf. auch Maßnahmen zu ihrer Behebung, ausgegeben werden. Diese Informationen versetzen dann den Benutzer oder den Servicetechniker in die Lage, schnell und effizient den Fehler zu beheben. Beispielsweise wird ein Alarm ausgelöst, wenn die Steuereinheit 70 diagnostiziert, dass der Sahnetemperaturfühler 80 irreguläres Verhalten (starke Abweichung der gemessenen Werte von Sollwerten oder plausiblen Wertebereichen, Schwankungen) aufweist. In diesem Fall ist beispielsweise auch die Aktivierung des Notlaufprogramms und/oder des Kapselschutzprogramms vorgesehen.

Wird die Sahne nicht mehr ausreichend gekühlt oder treten andere anomale Betriebszustände auf, können Beeinträchtigungen der Gesundheit für den Sahnekonsumenten auftreten, die durch die Anzeige entsprechender Alarmmeldungen, in Kombination mit von der Steuereinheit 70 eingeleiteten Maßnahmen, extrem reduziert werden können.

Das Display 76 kann ferner Anweisungen an den Benutzer zur Durchführung der Reinigungsprozedur ausgegeben und ihn gewissermaßen schrittweise durch die Reinigungsprozedur führen, wobei der Benutzer die von ihm durchgeführten Schritte mit Hilfe der Bedieneinheit bestätigen kann.

Als Display eignen sich z.B. LCD Displays. Vorteilhafterweise wird eine vierstellige Dotmatrix mit z.B. 20 mal 7 Punkten verwendet. Ferner können in oder am Display oder an der Bedieneinheit LEDs angebracht sein.

Die Steuereinheit 70 und/oder die Bedieneinheit 74 umfasst vorteilhafterweise eine Echtzeituhr mit einem Batteriepuffer zur Überbrückung von Stromausfällen.

Durch die Kombination der in der Steuereinheit 70 integrierten oder mit ihr verbundenen Echtzeituhr und der Datenerfassung der Temperaturfühler 80, 88, kann die Steuereinheit 70 Daten gemäß der HACCP-Vorschriften aufzeichnen. Diese Daten werden vorzugsweise im 15-Minuten Takt erfasst und in z.B. einem Ringspeicher abgelegt. Bei allen derart aufgezeichneten Informationen wird grundsätzlich die Uhrzeit miterfasst. Jedes abgespeicherte Ereignis erhält auf diese Weise gewissermaßen einen Zeitstempel. Der Speicher ist vorzugsweise so ausgelegt, dass er die Daten für ein gesamtes Jahr gleichzeitig abspeichern kann. Die Daten können beispielsweise über eine mit der Steuereinheit verbundene Schnittstelle ausgelesen werden. Durch die Abspeicherung geeigneter Daten kann die Maschinenhistorie nachvollzogen werden, und anfallende Reparatur- und Wartungsarbeiten können geplant werden. Dazu werden beispielsweise Schaltvorgänge, Anzahl der Betriebsstunden, Anzahl und Zeitpunkte von Reinigungen und Pumpenlaufzeiten erfasst.

Der Vorrichtung 2 kann bei einer Anforderung des Benutzers, beispielsweise über die Bedieneinheit 74, Schlagsahne über die Garniertülle 30 entnommen werden. Bei Benutzeranforderung veranlasst die Steuereinheit 70, dass Flüssigsahne aus dem Sahnetopf 12 durch die Schlagvorrichtung 22 mit Hilfe der Pumpe 14 gepumpt wird. Zur Entnahme der Schlagsahne wird dann das Magnetventil 100 geöffnet. Es erweist sich als vorteilhaft, wenn das Magnetventil 100 nach Abschluss der Sahneentnahme nicht unmittelbar wieder geschlossen wird, sondern noch für ca. 0,5 Sekunden länger geöffnet bleibt. Durch diese Maßnahme kann sich der Druck, der sich während der Sahneentnahme in der Schlagvorrichtung 22 gebildet hat bzw. der Restdruck, der noch in der Schlagvorrichtung 22 besteht und typischerweise zwischen 6 und 12 bar liegt, schnell (auf einen niedrigeren Druck) abbauen bzw. entspannen. Dadurch werden langfristig Schäden an der Pumpe 14 vermieden und ihre Lebensdauer wird erhöht. Zudem wird bei erneuter Sahneentnahme durch das schlagartige Öffnen des Magnetventils 100 der auftretende Druck an der Garniertülle 30 reduziert und somit die Spritzneigung der geschlagenen Sahne stark reduziert. Dadurch kann die geschlagene Sahne problemlos auf Flüssigkeiten, wie z.B. heißen Kaffee, aufgebracht werden.

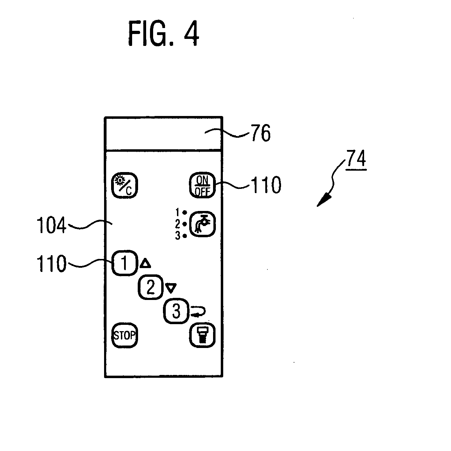

Die Bedieneinheit 74 zur benutzergesteuerten Interaktion mit der Vorrichtung 2 bzw. ihrer Steuereinheit 70 umfasst vorzugsweise ein Touch-Panel 104, für das beispielsweise eine auf Mineralglas basierende Glasfläche verwendet wird. Eine bevorzugte Ausführungsform des Touch-Panels 104, zusammen mit einem Display 76, ist in Fig. 4 dargestellt. Die Glasfläche wird rückseitig, also auf der dem Benutzer abgewandten Seite, mit (Bedien-) Symbolen bedruckt. Dazu wird eine Lackschicht auf die Glasfläche aufgetragen und der Lack dann in die Glasfläche eingebrannt. Die Lackschicht kann ein- oder mehrfarbig sein, wobei die verschiedenen Farben in aufeinanderfolgenden Arbeitsgängen auf die Glasfläche aufgebracht werden können. Die Glasfläche ist dabei in ein Kunststoff-Rahmenelement eingeklebt, wobei die Dichtigkeit dieser Konstruktion z.B. IP65 betragen soll, wodurch es gegen die direkte Einspritzung von Wasser geschützt ist.

Die Glasfläche ist in Form einer Lackschicht rückseitig mit Bedienelementen, beispielsweise in Form von im Wesentlichen rechteckigen oder ovalen Schaltflächen bzw. Bedienelementen 110 bedruckt. Hinter den jeweiligen Schaltflächen sind kapazitive Näherungssensoren installiert, die sensitiv auf das Berühren des über einer Schaltfläche liegenden Glasbereiches mit einem Finger reagieren. Auf diese Weise entstehen berührungsempfindliche Tastenflächen. Die Kombination einer rückseits bedruckten Glasfläche mit Näherungssensoren verhindert eine Abnutzung der Schaltflächen, wie sie beispielsweise bei mechanischen Tastern und Folientastaturen auftreten kann und führt zu einer langen Haltbarkeit. Das Einbrennen der Lackschicht in die Glasfläche führt zu einer äußerst geringen Empfindlichkeit der Lackschicht gegenüber Berührungen, wie sie beispielsweise beim Einbau des Touch-Panels aus der Vorrichtung 2 auftreten können. Die Anzahl der Tastenzyklen ist bei dem vorgesehenen Touch-Panel unbegrenzt.

Das in Fig. 4 dargestellte Touch-Panel umfasst verschiedene Bedienelemente 110, die dem Benutzer unterschiedliche Funktionen zur Verfügung stellen. Die Vorrichtung 2 kann über die Bedienelemente 110 in den Tag- oder den Nachtmodus versetzt werden und ein- bzw. ausgeschaltet werden. Durch das Betätigen vorgegebener Schaltflächen bzw. Bedienelemente 110 kann die Portionsgröße der zu entnehmenden Schlagsahne gewählt werden. Diese sind als Portionsgrößen im Nachtmodus vom Benutzer individuell einstellbar und werden in der Steuereinheit 70 hinterlegt. Über ein weiteres Bedienelement kann Sahne auch manuell bedarfsgerecht entnommen werden. Sahneentnahme, Reinigungsaufforderungen und Textmeldungen können über das Touch-Panel (zumindest temporär und für einen gewissen Zeitraum) gestoppt bzw. deaktiviert werden.

Das Touch-Panel erlaubt über bereitgestellte Schaltflächen die Umschaltung der Vorrichtung 2 in verschiedene Betriebsmodi. Es dient weiterhin zur Interaktion des Benutzers mit der Vorrichtung 2 während der Reinigungsprozedur.

Bedieneinheit 74, Display 76 und Steuereinheit 70 können als einzelne und räumlich voneinander getrennte Komponenten ausgeführt sein. Sie können aber auch auf verschiedene Weisen baulich und/oder schaltungstechnisch miteinander kombiniert bzw. ineinander integriert werden.

Der Betrieb der Vorrichtung 2 wird durch unterschiedliche Parameter beeinflusst. Vorzugsweise sind zur Einstellung der Parameter verschiedene Hard- und/oder Software-Ebenen vorgesehen, die jeweils durch (unterschiedliche) Passwörter geschützt sind, welche z.B. über die Bedieneinheit 74 eingegeben werden. Vorzugsweise sind zwei Ebenen über die Bedieneinheit 74 erreichbar, die im Folgenden als Bedienebene bzw. Benutzerebene und als Serviceebene bezeichnet werden. Vorteilhafterweise existiert noch eine dritte Ebene, die beispielsweise als Werksebene bezeichnet werden kann. Ein Datenaustauch auf Werksebene, Serviceebene oder Benutzerebene kann über die Bedieneinheit 74 und/oder über einen direkten Datenaustausch mit der Steuereinheit 70, beispielsweise über eine serielle Schnittstelle, geschehen. Für gewisse Parameter sind vorteilhafterweise werksseitig Standardwerte voreingestellt.

Die auf der Bedienebene einstellbaren Parameter, die in der Steuereinheit 70 hinterlegt werden, umfassen beispielsweise verschiedene abrufbare Dosierzeiten zur Entnahme von geschlagener Sahne, die Uhrzeit, die automatische Umstellung von Sommer- auf Winterzeit und umgekehrt, Zeitintervalle für die Reinigungsaufforderungen, akustisches und/oder visuelles Feedback der Bedieneinheit 74 auf Benutzereingaben, sowie die Sprache. Ferner können die Helligkeit des Displays 76 und die Lauftextgeschwindigkeit von auf dem Display 76 ausgegebenem Text eingestellt werden. Diese Parameter betreffen somit Einstellungen, die auf Benutzerebene für den täglichen Betrieb der Vorrichtung 2 maßgeblich sind. Bei der der Verwendung der Vorrichtung 2 bei einem Sahnemaschinenbetreiber, z.B.in einem Eiscafé, können je nach Anforderung passende Dosierzeiten und damit Sahneportionsgrößen eingestellt werden.

Die auf der Serviceebene einstellbaren Parameter betreffen die technischen Abläufe und Funktionen der Vorrichtung 2. Dazu gehört beispielsweise der Sollwert der Temperatur, auf den die Flüssigsahne thermostatisch eingeregelt werden soll.

Weitere Parameter betreffen Zeitintervalle für die Reinigung der Luftregulierung, für die Wiederholung von abgebrochenen Reinigungsaufforderungen und für die Anforderung von Servicepersonal. Es können auch Korrekturwerte für die von den Temperaturfühlern 80, 88 gemessenen Werte vorgesehen sein.

### Bezugszeichenliste

- 2: Vorrichtung
- 4: Grundplatte
- 6: Zwischenplatte
- 7: Deckfläche
- 8: Abstandshalter
- 10: Kühlbehälter
- 12: Sahnetopf
- 13: Pumpenmotor
- 14: Pumpe
- 16: Motorflansch
- 18: Saugrohr
- 22: Schlagvorrichtung
- 26: Luftregulierung
- 28: Auslauf
- 30: Garniertülle
- 34: Kältekompressor
- 38: Kälteschlange
- 42: Kälteleitplatte
- 46: Kühlschlange
- 50: Verflüssiger
- 54: Ventilator
- 58: Kälteleitrohr
- 62: Ausgangsstück
- 64: Anschlusseinheit
- 66: Transformator
- 70: Steuereinheit
- 74: Bedieneinheit
- 76: Display
- 80: Sahnetemperaturfühler
- 88: Verdampfertemperaturfühler
- 92: Verdampfer
- 100: Magnetventil
- 104: Touch-Panel
- 110: Bedienelement

## Patentansprüche

1. Vorrichtung (2) zur Erzeugung von Schlagsahne oder ähnlichen Produkten mit einem Kühlbehälter (10), einem im Kühlbehälter (10) angeordneten Sahnetopf (12) für Flüssigsahne, und einem Kühlkreislauf zur Kühlung des Kühlbehälters (10), **dadurch gekennzeichnet, dass** der Kühlkreislauf einen Kühlmittelkompressor (34) und einen am oder im Kühlbehälter (10) angeordneten Kühlmittevlerdampfer (92) umfasst, wobei eine elektronische Steuereinheit (70) vorgesehen ist, die signaleingangsseitig mit einem am oder im Sahnetopf (12) oder an oder im Kühlbehälter (10) angeordneten Sahnetemperaturfühler (80) verbunden ist, und wobei die Steuereinheit (70) ein Reglermodul umfasst, das in der Art einer thermostatischen Temperaturregelung durch Ansteuerung des Kühlmittelkompressors (34) die Sahnetopftemperatur auf einen vorgegebenen Sollwert regelt, wobei die Steuereinheit (70) signaleingangsseitig mit einem am oder im Kühlmittelverdampfer (92) angeordneten Verdampfertemperaturfühler (88) verbunden ist, und wobei die Steuereinheit (70) ein Diagnosemodul umfasst, das die vom Sahnetemperaturfühler (80) und vom Verdampfertemperaturfühler (88) gelieferten Temperaturmesswerte einer Plausibilitätsprüfung unterzieht und bei Auftreten einer Inkonsistenz oder eines Fühlerausfalls eine Störungsroutine aufruft.

2. Vorrichtung (2) nach Anspruch 9, wobei die Plausibilitätsprüfung einen Vergleich der Temperaturmesswerte von Sahnetemperaturfühler (80) und Verdampfertemperaturfühler (88) umfasst.

3. Vorrichtung (2) nach Anspruch 2, wobei das Diagnosemodul derart konfiguriert ist, dass die Störungsroutine aufgerufen wird, sobald der Betrag der Differenz zwischen den beiden Temperaturmesswerten über einen vorgegebenen Mindestzeitraum hinweg einen vorgegebenen Schwellenwert überschreitet und/oder sobald zumindest einer der beiden Temperaturmesswerte einen ihm zugeordneten oberen Schwellenwert überschreitet oder einen ihm zugeordneten unteren Schwellenwert unterschreitet.

4. Vorrichtung (2) nach Anspruch 1 oder 2, wobei die Störungsroutine den Kühlmittelkompressor (34) wechselweise an- und ausschaltet, wobei fest vorgegebene Laufzeiten und Ruhezeiten vorgesehen sind, die in einem persistenten Speichermodul der Steuereinheit (70) hinterlegt sind.

5. Vorrichtung (2) nach einem der Ansprüche 1 bis 4, deren Steuereinheit (70) ein Kühlkreislaufüberwachungsmodul umfasst, das den Kühlvorgang vorübergehend unterbricht und insbesondere den Kühlmittelkompressor (34) abschaltet, sobald der vom Verdampfertemperaturfühler (88) ermittelte Temperaturmesswert über einen vorgegebenen Mindestzeitraum hinweg einen vorgegebenen Schwellenwert unterschreitet oder sobald eine vorgegebene Laufzeit des Kühlmittelkompressors (34) überschritten wird.

6. Vorrichtung (2) nach Anspruch 5, wobei das Kühlkreislaufüberwachungsmodul den Kühlvorgang wieder fortsetzt, sobald der vom Verdampfertemperaturfühler (88) ermittelte Temperaturmesswert einen vorgegebenen Schwellenwert überschreitet und/oder eine vorgegebene Ruhezeit eingehalten wurde.

7. Vorrichtung (2) nach einem der Ansprüche 1 bis 6, deren Steuereinheit (70) Mittel zur Umschaltung von einem Tagmodus in einen Nachtmodus und umgekehrt umfasst, wobei im Nachtmodus die zur Schlagsahneentnahme vorgesehenen Komponenten, insbesondere ein Pumpenmotor (13) und ein Magnetventil (100), deaktiviert und von einer zugehörigen Stromversorgungseinheit getrennt sind.

8. Vorrichtung (2) nach Anspruch 7, deren Steuereinheit (70) derart konfiguriert ist, dass beim Umschalten auf den Nachtmodus eine Reinigungsaufforderung auf einem Display (76) aktiviert wird, wobei bei Einleitung eines Reinigungsvorganges eine Abfolge der für die Reinigung erforderlichen Bedienschritte auf dem Display (76) angezeigt wird, die vom Benutzer durch Bedieneingaben Schritt für Schritt quittiert werden müssen.

9. Vorrichtung (2) nach Anspruch 8, wobei im Nachtmodus Betriebsparameter der Vorrichtung (2) einstellbar oder programmierbar sind; und wobei die Eingabe der Betriebsparameter über eine an die Steuereinheit (70) angeschlossene Bedieneinheit (74) erfolgt und vorzugsweise durch eine interaktive Menuführung auf einem zugehörigen Display (76) unterstützt wird.

10. Vorrichtung (2) nach Anspruch 9, wobei mehrere Bedienebenen vorgesehen sind, die jeweils durch unterschiedliche Passwörter geschützt sind, und die jeweils einen Zugriff auf unterschiedliche Gruppen von Betriebsparametern zulassen.

11. Vorrichtung (2) nach einem der Ansprüche 1 bis 10, deren Steuereinheit (70) einen insbesondere als Ringspeicher ausgebildeten Betriebsdatenspeicher umfasst, in dem mit einem Zeitstempel versehene betriebsspezifische Daten zu einer vordefinierten Gruppe sensorisch und/oder dateneingabemäßig erfassbarer relevanter Betriebsereignisse, insbesondere bezüglich angeforderter und/oder durchgeführter Reinigungsvorgänge, automatisch abgespeichert werden.

12. Vorrichtung (2) nach einem der Ansprüche 1 bis 11, deren Steuereinheit (70) eine Leckageüberwachung umfasst, die Undichtigkeiten innerhalb der Maschine prüft.

13. Vorrichtung (2) nach einem der Ansprüche 1 bis 12, die eine an die Steuereinheit (70) angeschlossene Bedieneinheit (74) aufweist, die als berührungsempfindliches Touch-Panel (104) ausgebildet ist.

14. Vorrichtung (2) nach Anspruch 13, wobei das Touch-Panel (104) eine im Wesentlichen transparente Glasplatte mit einer als Berührfläche vorgesehenen Vorderseite und einer Rückseite aufweist, und wobei die Rückseite mit farbigen Bediensymbolen bedruckt, beschichtet oder eingebrannt, oder mit einer entsprechende Folie belegt oder beklebt ist.

15. Vorrichtung (2) nach einem der Ansprüche 1 bis 14 mit einer Pumpe (14) zum Transport der Flüssigsahne vom Sahnetopf (12) über ein Schlagsystem (22) zu einem durch ein Magnetventil (100) verschließbaren Auslauf (28), wo die geschlagene Sahne entnehmbar ist, wobei das Magnetventil (100) und die Pumpe (14) auf eine entsprechende Bedienaufforderung hin über die Steuereinheit (70) angesteuert werden, und wobei die Steuereinheit (70) derart konfiguriert ist, dass das Wiederverschließen des Magnetventils (100) nach erfolgter Öffnung um eine vorgegebene Zeitspanne gegenüber dem Abschaltzeltpunkt der Pumpe (14) verzögert wird.

## Claims

1. A device (2) for producing whipped cream or similar products, comprising a cooling container (10), a cream pot (12) arranged in the cooling container (10) for storing liquid cream, and a cooling circuit for cooling the cooling container (10), **characterized in that** the cooling circuit comprises a coolant compressor (34) and a coolant evaporator (92) arranged on or in the cooling container (10), wherein an electronic control unit (70) is provided, which is connected on the signal-input side with a cream-temperature sensor (80) arranged on or in the cream pot (12), or on or in the cooling container (10), and wherein the control unit (70) comprises a controller module which adjusts the cream-pot temperature to a predetermined setpoint value by activating the coolant compressor (34), in the manner of a thermostatic temperature control, wherein the control unit (70) is connected on the signal-input side with an evaporator-temperature sensor (88) arranged on or in the coolant evaporator (92), and wherein the control unit (70) comprises a diagnostic module which subjects the measured temperature values transmitted by the cream-temperature sensor (80) and by the evaporator-temperature sensor (88) to a plausibility check and, if an inconsistency or a sensor failure occurs, invokes an error routine.

2. The device (2) of claim 1, wherein the plausibility check comprises a comparison of the measured temperature values of the cream-temperature sensor (80) and of the evaporator-temperature sensor (88).

3. The device (2) of claim 2, wherein the diagnostic module is configured such that an error routine is invoked as soon as the amount of the difference between the two measured temperature values, during a predetermined minimum period of time, exceeds a predetermined threshold value and/or as soon as at least one of the two measured temperature values exceeds an upper threshold value assigned to it or falls below a lower threshold value assigned to it.

4. The device (2) of claim 1 or 2, wherein the error routine switches the coolant compressor (34) alternately on and off, and wherein fixedly predetermined running times and rest times are provided, which are stored in a persistent storage module of the control unit (70).

5. The device (2) of any of claims 1 to 4, whose control unit (70) comprises a cooling-circuit monitoring module, which temporarily interrupts the cooling process and in particular switches off the coolant compressor (34), as soon as the measured temperature value determined by the evaporator-temperature sensor (88), during a predetermined minimum period of time, falls below a predetermined threshold value or as soon as a predetermined running time of the coolant compressor (34) is exceeded.

6. The device (2) of claim 5, wherein the cooling-circuit monitoring module continues the cooling process as soon as the measured temperature value determined by the evaporator-temperature sensor (88) exceeds a predetermined threshold value and/or a predetermined rest time has expired.

7. The device (2) of any of claims 1 to 6, whose control unit (70) comprises means for switching over from a day mode to a night mode and vice versa, whereby the components provided for withdrawal of whipped cream, in particular a pump motor (13)
and a solenoid valve (100), are deactivated and disconnected from an associated power-supply unit in the night mode.

8. The device (2) of claim 7, whose control unit (70) is configured such that a cleaning request is activated on a display (76) upon switch-over to the night mode, whereby a sequence of the operating steps necessary for cleaning are displayed on the display (76) upon initiation of a cleaning process, which operating steps have to be acknowledged step by step by the user through operator inputs.

9. The device (2) of claim 8, wherein operating parameters of the device (2) are adjustable or programmable in the night mode and wherein the input of the operating parameters is effected by means of an operator unit (74) connected to the control unit (70) and is preferably assisted by an interactive menu prompting on an associated display (76).

10. The device (2) of claim 9, wherein several operating levels are provided, which are each protected by different passwords and allow in each case an access to different groups of operating parameters.

11. The device (2) of any of claims 1 to 10, whose control unit (70) comprises an operating-data storage configured in particular as a circular storage, in which operation-specific data, provided with a time stamp, for a predefined group are automatically stored sensorically and/or relative to relevant operation events detectable by data input, in particular relative to cleaning processes which have been requested and/or carried out.

12. The device (2) of any of claims 1 to 11, whose control unit (70) comprises a leakage monitoring system checking leakages inside the machine.

13. The device (2) of any of claims 1 to 12, comprising an operator unit (74) connected to the control unit (70), which operator unit (74) is configured as a touch-sensitive touch panel (104).

14. The device (2) of claim 13, wherein the touch panel (104) comprises a substantially transparent glass plate with a front side provided as a touch surface and a rear side and wherein colored operating symbols are printed, coated or burned, or a corresponding foil is laid or glued onto the rear side.

15. The device (2) of any of claims 1 to 14, having a pump (14) for transporting the liquid cream from the cream pot (12) through a whipping system (22) to an outlet opening (28) closable by means of a solenoid valve (100), where the whipped cream can be withdrawn, wherein the solenoid valve (100) and the pump (14) are activated via the control unit (70) upon a corresponding operator request, and wherein the control unit (70) is configured such that the closing of the solenoid valve (100) after its opening is delayed as against the switch-off time of the pump (14) by a predetermined period of time.

## Revendications

1. Dispositif (2) pour produire de la crème fouettée ou de produits semblables, comprenant un récipient de refroidissement (10), un pot de crème (12) disposé à l'intérieur du récipient de refroidissement (10) pour recevoir de la crème liquide, et un circuit de refroidissement pour refroidir le récipient de refroidissement (10), **caractérisé en ce que** le circuit de refroidissement comprend un compresseur d'agent refroidisseur (34) et un évaporateur d'agent refroidisseur (92) disposé sur ou dans le récipient de refroidissement (10), dans lequel une unité de contrôle (70) électronique est prévue, qui est raccordée du côté d'entrée de signal à une sonde de la température de la crème (80) disposé sur ou dans le pot de crème (12), ou sur ou dans le récipient de refroidissement (10), et dans lequel l'unité de contrôle (70) comprend un module de réglage qui règle la température du pot de crème à un valeur de consigne prédéterminée en excitant le compresseur d'agent refroidisseur (34), de la manière d'un réglage thermostatique de la température, dans lequel l'unité de contrôle (70) est raccordée du côté d'entrée de signal à une sonde de la température de l'évaporateur (88) disposée sur ou dans l'évaporateur d'agent refroidisseur (92) et dans lequel l'unité de contrôle (70) comprend un module de diagnostic qui soumet les valeurs mesurées de la température transmises par la sonde de la température de la crème (80) et par la sonde de la température de l'évaporateur (88) à un contrôle de vraisemblance et, si se produit une inconsistance ou une défaillance d'une sonde, appelle une routine d'erreur.

2. Dispositif (2) selon la revendication 1, dans lequel le contrôle de vraisemblance comprend une comparaison des valeurs mesurées de la température de la sonde de la température de la crème (80) et de la sonde de la température de l'évaporateur (88).

3. Dispositif (2) selon la revendication 2, dans lequel le module de diagnostic est configuré de façon à ce qu'une routine d'erreur est appelée dès que le montant de la différence entre les deux valeurs mesurées de la température dépassera, pendant un intervalle de temps minimal prédéterminé, une valeur seuil prédéterminée et/ou dès qu'au moins une des deux valeurs mesurées de la température dépassera une valeur seuil supérieure y affectée ou restera en dessous d'une valeur seuil inférieure y affectée.

4. Dispositif (2) selon la revendication 1 ou 2, dans lequel la routine d'erreur met en marche et arrête le compresseur d'agent refroidisseur (34) alternativement, et dans lequel des temps de marche et des temps de repos fermement prédéterminés sont prévus, qui sont mémorisés dans un module mémoire persistant de l'unité de contrôle (70).

5. Dispositif (2) selon l'une quelconque des revendications 1 à 4, dont l'unité de contrôle (70) comprend un module de monitorage du circuit de refroidissement, qui interrompt temporairement le processus de refroidissement et arrête en particulier le compresseur d'agent refroidisseur (34) dès que la valeur mesurée de la température déterminée par la sonde de la température de l'évaporateur (88) restera, pendant un intervalle de temps minimal prédéterminé, en dessous d'une valeur seuil prédéterminée et/ou dès qu'un temps de marche du compresseur d'agent refroidisseur (34) sera dépassé.

6. Dispositif (2) selon la revendication 5, dans lequel le module de monitorage du circuit de refroidissement continue le processus de refroidissement dès que la valeur mesurée de la température déterminée par la sonde de la température de l'évaporateur (88) dépassera une valeur seuil prédéterminée et/ou un temps de repos prédéterminé sera expiré.

7. Dispositif (2) selon l'une quelconque des revendications 1 à 6, dont l'unité de contrôle (70) comprend des moyens pour commuter d'un mode de jour à un mode de nuit et vice versa et dans lequel les composants prévus pour la prise de la crème fouettée, en particulier un moteur de pompe (13) et une vanne magnétique (100), sont désactivés et déconnectés d'une unité d'alimentation en courant électrique y affectée dans le mode de nuit.

8. Dispositif (2) selon la revendication 7, dont l'unité de contrôle (70) est configurée de façon à ce qu'un appel de nettoyage est activé sur un display (76) lors de la commutation au mode de nuit et dans lequel une séquence des pas de commande nécessaires pour le nettoyage est affichée sur le display (76) lors de l'introduction d'un processus de nettoyage, dits pas de commande devant être confirmés pas à pas par l'utilisateur à l'aide des entrées d'opératteur.

9. Dispositif (2) selon la revendication 8, dans lequel des paramètres d'exploitation du dispositif (2) sont réglables ou programmables dans le mode de nuit et dans lequel l'entrée des paramètres d'exploitation est effectuée au moyen d'une unité de commande (74) raccordée à l'unité de contrôle (70) et est préférablement assistée par un guidage interactif par menu sur un display (76) y appartenant.

10. Dispositif (2) selon la revendication 9, dans lequel plusieurs niveaux de commande sont prévus, chacun d'eux protégé par des mots de passe différents et autorisant à accéder à des groupes différents de paramètres d'exploitation.

11. Dispositif (2) selon l'une quelconque des revendications 1 à 10, dont l'unité de contrôle (70) comprend une mémoire de données d'exploitation configurée en particulier comme mémoire circulaire, dans laquelle des données spécifiques à l'exploitation, munies d'un timbre de temps, pour un groupe prédéfini sont mémorisées automatiquement de manière sensorielle et/ou relativement à des évènements d'exploitation importants saisissables par entrée de données, en particulier relativement à des processus de nettoyage qui ont été appelés et/ou effectués.

12. Dispositif (2) selon l'une quelconque des revendications 1 à 11, dont l'unité de contrôle (70) comprend un système de monitorage de fuites contrôlant des fuites à l'intérieur de la machine.

13. Dispositif (2) selon l'une quelconque des revendications 1 à 12, comprenant une unité de commande (74) raccordée à l'unité de contrôle (70), dite unité de commande (74) étant configurée comme panneau de commande à contact (104)

14. Dispositif (2) selon la revendication 13, dans lequel le panneau de commande à contact (104) comprend une plaque de verre essentiellement transparente avec une face de devant prévue comme face de contact et une face arrière et dans lequel des symboles de commande en couleur sont imprimés, revêtus ou recuits, ou une feuille correspondante est mise ou collée sur la face arrière.

15. Dispositif (2) selon l'une quelconque des revendications 1 à 14, ayant une pompe (14) pour transporter la crème liquide du pot de crème (12) à travers un système de fouettage (22) vers une ouverture de sortie (28), fermable au moyen d'une vanne magnétique (100), où la crème fouettée peut être prise, dans lequel la vanne magnétique (100) et la pompe (14) sont activées au moyen de l'unité de contrôle (70) à la suite d'une demande correspondante de l'opérateur, et dans lequel l'unité de contrôle (70) est configurée de manière à ce que la fermeture de la vanne magnétique (100) après son ouverture est retardée par rapport au temps d'arrêt de la pompe (14) par un espace de temps prédéterminé.
